# EUROPEAN PATENT APPLICATION

(11) **EP 3 955 197 A1**
(43) Date of publication of application: **16.02.2022**
(21) Application number: 21382656.3
(22) Date of filing: 20.07.2021
(51) Int. Cl.: G06Q 20/32, G07F 7/02

(54) **PAYMENT MODULE FOR PRODUCT VENDING MACHINES**

(30) Priority: 20.07.2020 ES 202031586 U
(71) Applicant: Muxunav, S.L., 31699 Olloki (Navarra) (ES)
(72) Inventor: ANTONIO, TORRES LOPEZ, OLLOKI (Navarra) (ES)
(74) Representative: Herrero & Asociados, S.L.

(57) **Abstract**

Payment module for product vending or dispensing machines of the type with a number of different products to be dispensed, the payment module (9) comprises a control unit (5), a communication system (6) with external server access capability and at least one display (3) with product information, such that the display (3) is configured to show a code (4) readable, by optical means, by an electronic device (7) of a user, generated by the control unit (5) and comprising an identification of the product or dispensing channel and its price, as well as data to create a connection to a payment gateway for the product.

## Description

### TECHNICAL SECTOR

The present invention relates to a payment module mainly applicable to vending machines, also known as *vending* machines, which has great advantages in terms of ease of payment, hygienic measures and anti-theft security.

The object of the invention is to obtain a distributor of products, foodstuffs or otherwise, that can collect payment wirelessly without requiring the storage or transfer of money.

### STATE OF THE ART

There are many known contactless payment methods on the market. However, there is no module that can be attached to vending machines that allows payment with absolutely no contact with the machine.

This requires solving multiple problems associated with the imperative stages of selecting a product and making payment. In the current technique, it is necessary to type the alphanumeric code of the product on a keyboard or display, or to press the appropriate button if it is a dispenser of hot or cold drinks, tobacco brands, snacks... insert the means of payment (coins, prepaid card...) or payment by NFC which requires proximity.

In situations such as the recent global health crisis created by COVID 19, the need for a system that can be used in existing vending machines without even the slightest contact becomes apparent.

Applications EP3096408, ES1094562U and WO2015173452, owned by the applicant, are well known. These applications describe systems that use displays instead of plastic product identification labels. The displays allow the broadcasting of messages relating to product advertising, nutritional characteristics and other information. It is mentioned that they can be all kinds of audio-visual messages, but the possible development path taken in this application is not acknowledged.

The applicant is not aware of any solution similar to the invention.

### DESCRIPTION OF THE INVENTION

The invention consists of a payment module for vending machines according to the claims.

The payment module is intended for the type of product vending or dispensing machines that have a number of different products to be dispensed. This payment module comprises: a control unit, a communication system with the capacity to access an external server, and at least one display with product information. This display can be the dispensing machine's own display. The display is configured to show a code, among other information, which has the following particularities:
It is optically readable by a user's electronic device.
It is generated by the control unit.
It comprises an identification of the optional machine, an identification of the product or its dispensing channel and its price, as well as data to create a connection to a payment gateway for the product.

For example, the code can be a QR code, a BiDi code, any graphic design,... or even a barcode if it is read with an application that can create the gateway from that code.

This payment module can be configured to connect to two or more vending machines, by its number of connectors, displays, etc...

The connection to the gateway can be made by having the code comprise a web address for payment or prompts for payment from an application on the electronic device.

The module may comprise one or more sensors for the presence of an electronic device or a user. This allows codes to be generated only at that point in time and include time stamps, random codes or cryptographic "salt"...

Other variants will be described further in the remainder of this report.

### DESCRIPTION OF THE DRAWINGS

For a better understanding of the invention, the following figures are included.
- Figure 1:: Simplified perspective view of an exemplary embodiment.
- Figure 2:: Schematic diagram of an example of a payment module.

### DETAILED DESCRIPTION OF A PREFERRED EMBODIMENT OF THE INVENTION

The following is a brief description of one embodiment of the invention, as an illustrative and non-limiting example.

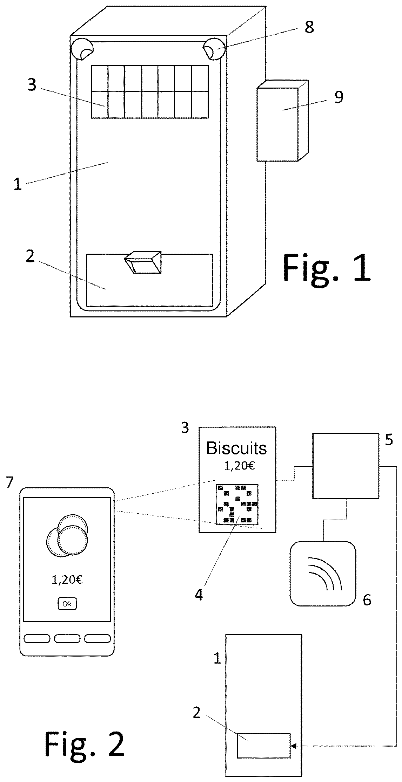

The dispenser shown in figure 1 comprises a housing (1) with a series of products arranged in trays, each with several rows. This dispenser also includes a means of extraction (2) of the products, preferably comprising an automatic hatch, which opens automatically when the product is available to the user. For example, it can be a bucket that is tipped over, leaving the inside of the bucket accessible. In this way, the user does not have to touch anything other than the product.

The dispenser comprises a payment module (9) which can be remote (connected by wired or wireless means), incorporated into the housing (1) on the outside or inside. The latter is preferable to avoid unwanted manipulation.

The payment module (9) comprises a number of displays (3), one per product, one for each row of each tray or one display (3) for several products. It may also be a single display (3) with all relevant information, for example divided into one sector per product. The displays (3) shall be e.g. TFT, liquid crystal display, electronic ink or any other technology.

The displays (3) may be part of the dispenser or integrated into the dispenser, in which case the payment module (9) will comprise a connector suitable for sending information to them directly, or via the dispenser. In this case, they can act as a substitute for the plastic identification labels of each product without being exclusive for other uses. The displays (3) will also emit an optically readable code (4) such as a QR code, BiDi or any other type of code. The display (3) can switch between types of information, display all at once, or any combination thereof.

The payment module (9) further comprises a control unit (5), e.g. a CPU, which has a communication system (6) that can be a SIM card, a connection via Bluetooth, WiFi, Lora or any other protocol or standard that allows access to an external server, usually via the internet, either directly or through a connection in the building. The communication system (6) comprises high security measures, since it will allow the connection as a payment gateway.

The control unit (5) is responsible for selecting the information to be displayed on the displays (3), including the code (4). This code (4) shall be translatable into a number of essential data: product identification (at least the position on the machine), and price. Optionally it may also show the machine identification. The code (4) may vary according to the time of issue, including a time stamp. It may also comprise a hash part to increase security.

The code (4) may also comprise a web address or similar address to which any electronic device (7) that reads the code (4) will connect if it has that capability. This web address will comprise a payment gateway or any way for the user to pay the price of the product. For example, it may comprise a username with a pre-loaded amount of money in a virtual piggy bank, from which the price is taken. It can also be a connection to PayPal, BitCoin or another similar means of payment provider.

The web address is not essential if the electronic device (7) comprises an application (app) that reads the code (4) and can interpret it to execute the payment.

In one embodiment, the display (3) first displays a selection code (4) that allows access to product information, but not to payment. The user has to act on his electronic device (7) to make the confirmation, which is sent to the payment module to change the code (4) to one that does allow payment.

The payment module (9) will preferably draw its power from the machine itself, although it could also be from the mains, either directly or via the distributor. If desired, rechargeable batteries can be provided to operate in the event of a power failure or if the machine is located in an off-grid location. This battery could be rechargeable by solar panels or another renewable method.

When the server confirms that the payment has been made properly, the payment module (9) will send a return signal to the distributor with the product to be delivered.

All shipments will be logged, on the server and in the payment module, with time stamps, to enable tracking. A discrepancy will allow to identify possible security breaches.

It should be borne in mind that these types of *vending* machines have very secure protocols precisely to prevent the hacking of the machine and therefore the theft of products or money.

In one embodiment, the payment module (9) comprises an on-device or remote sensor (8) for the presence of a nearby electronic device (7). The sensor (8) may use a Bluetooth detector, Wi-Fi detector, NFC detector, or a camera with object recognition. In another alternative, it will detect the presence of the user by a camera, a motion detector, an infrared sensor, etc. In these embodiments, the display (3) will start to show the code (4) as soon as it detects the presence.

The payment module (9) described above can be a stand-alone module to update or retrofit existing dispensers. For this purpose, the stand-alone module must be connected to MDB, RS232, RS485, fieldbus, firewire or any other port that can "speak" the machine's language and order it to dispense product after verifying that the payment has been made. This independent module can control several machines in parallel, as long as it can correctly identify which product is to be dispensed from which machine.

Thus, the procedure, in the most complete variant, comprises the steps of:
- Recognise the presence of a user with the sensors (8) incorporated in the payment module (9) or a dispenser.
- Create in the control unit (5) a code (4) for each product with identification and price data.
- Issue codes (4) on one or more displays (3) of the vending machine or payment module (9).
- Scan the code (4) of the desired product with an electronic device (7) of the user.
- Create a connection on the electronic device (7) to a web page or application server to form a payment gateway.
- If the payment is successful, send a validation from the server to the payment module (9).
- Order the dispensing of the product from the payment module (9) to the distributor.

That is, when the electronic device (7) scans the code (4) and connects to the web page or application server, the payment gateway is created, which approves the operation and sends the validation to the payment module (9) via WiFi, Bluetooth or the corresponding method. The payment module (9) orders the dispenser to dispense the product via the communication bus with the machine.

## Claims

1. Payment module for product dispensing machines of the type with a number of different products to be dispensed, **characterised in that** the payment module (9) comprises:
a control unit (5)
a communication system (6) with external server access capability; and
at least one display (3) with product information,
so that the display (3) is configured to show a code (4):
optically readable by a user's electronic device (7);
generated by the control unit (5) and
comprising an identification of the product or dispensing channel and its price, as well as data to create a connection to a payment gateway for the product.

2. Payment module according to claim 1, configured to be connected to two or more vending machines.

3. Payment module, according to claim 1, **characterised by** the fact that at least one display (3) is either its own or is integrated in the vending machine.

4. Payment module, according to claim 1, **characterised in that** it comprises a display (3) per product.

5. Payment module according to claim 1, **characterised in that** the code (4) comprises a web address for payment.

6. Payment module according to claim 1, **characterised in that** the code (4) comprises indications for payment from an application on the electronic device (7).

7. Payment module according to claim 1, **characterised in that** it comprises a sensor (8) of the presence of an electronic device (7) or of a user.

8. Payment module according to claim 1, **characterised in that** the code (4) comprises a machine identification.
